# EUROPÄISCHE PATENTANMELDUNG

(11) **EP 3 299 597 A2**
(43) Veröffentlichungstag der Anmeldung: **28.03.2018**
(21) Anmeldenummer: 17182924.5
(22) Anmeldetag: 25.07.2017
(51) Int. Cl.: F01N 3/20, F02M 61/08, F02M 61/10

(54) **ABGASREINIGUNGSEINRICHTUNG UND DÜSE FÜR DIESELBE**

(30) Priorität: 23.09.2016 DE 102016118043
(71) Anmelder: Eberspächer Exhaust Technology GmbH & Co. KG, 66539 Neunkirchen (DE)
(72) Erfinder: Weller, Bernd, 73568 Durlangen (DE); Gaiser, Gerd, 72768 Reutlingen (DE)
(74) Vertreter: Diehl & Partner GbR

(57) **Zusammenfassung**

Eine Düse (1) für eine Abgasreinigungsanlage weist einen Düsenkörper (10), einen im Inneren des Düsenkörpers (10) beweglich angeordneten Kolben (2), und eine Feder (3), welche zwischen dem Düsenkörper (10) und dem Kolben (2) angeordnet ist, auf. An dem Düsenkörper (10) sind ein Düseneinlass (11) für ein flüssiges Reduktionsmittel und eine Düsenmündung (14) ausgebildet. Dabei erstreckt sich zwischen dem Düseneinlass (11) und der Düsenmündung (14) ein Strömungskanal (12) für das flüssige Reduktionsmittel, und weitet sich die Düsenmündung (14) ausgehend vom Strömungskanal (12) zu einer Düsenöffnung (13) auf. Der Kolben (2) weist einen Kolbenkopf (21) auf. Dabei ist der Kolbenkopf (21) im Inneren der Düsenmündung (14) angeordnet und ausgebildet, die Düsenmündung (14) wahlweise zu verschließen oder freizugeben. Die Feder (3) spannt den Kolben (2) in eine Richtung vor, in welcher der Kolbenkopf (21) die Düsenmündung (14) verschließt. Dabei ist ein größter Durchmesser (D13) der Düsenöffnung (13) größer als ein größter Durchmesser (D21) des Kolbenkopfes (21).

Eine Abgasreinigungseinrichtung (5) für Kraftfahrzeuge weist neben einem Tank (51) für ein flüssiges Reduktionsmittel und einer passiven Düse (1) mit integriertem Ventil eine Reduktionsmittelleitung (52) zum Führen des flüssigen Reduktionsmittels von dem Tank (51) zum Düseneinlass (11) der Düse (1), eine Reduktionsmittelpumpe (53), welche entlang der Reduktionsmittelleitung (52) zwischen dem Tank (51) und der Düse (1) angeordnet ist und eine Steuerung (54) zum Steuern der Reduktionsmittelpumpe (53) auf. Dabei ist die Steuerung (54) ausgebildet, die Reduktionsmittelpumpe (53) kontinuierlich mit variabler Fördermenge zu betreiben.

## Beschreibung

Die vorliegende Erfindung betrifft eine Abgasreinigungseinrichtung für Kraftfahrzeuge, bei welcher für die Reinigung des Abgases ein flüssiges Reduktionsmittel verwendet wird. Genauer gesagt betrifft die vorliegende Erfindung eine Düse für einen SCR-Katalysator (SCR = selective catalytic reduction = Selektive katalytische Reduktion) einer Abgasreinigungsanlage.

Im Abgas von Feuerungsanlagen, Müllverbrennungsanlagen, Gasturbinen, Industrieanlagen und Motoren sind häufig Stickoxide NOₓ enthalten. Stickoxide treten bei der thermischen Verwertung von festen, gasförmigen und flüssigen natürlichen und fossilen Brennstoffen wie beispielsweise Kohle, Gas, Öl und Holz auf. Stickoxide sind insbesondere im Abgas von Verbrennungsmotoren für Kraftfahrzeuge und Nutzfahrzeuge enthalten. Besonders hoch ist der Anteil von Stickoxiden im Abgas von dieselbetriebenen Verbrennungsmotoren.

Stickoxide stehen im Verdacht, die menschlichen Atmungsorgane zu reizen oder zu schädigen (insbesondere Stickstoffdioxid NO₂). Weiter werden Stickoxide mit der Entstehung des "Sauren Regens" infolge der Bildung von Salpetersäure (HNO₃) durch die Reaktion von (2NO₂ + H₂O → HNO₃ + HNO₂) oder durch Aufnahme von N₂O₅ in Aerosolpartikel und nachfolgender Bildung von NO₃⁻ in flüssiger Phase in Verbindung gebracht. Weiter gelten Stickoxide unter Einfluss von UV-Strahlung als an der Bildung von Smog und Ozon O₃ beteiligt.

In der Folge werden verstärkt Anstrengungen unternommen, den Gehalt von Stickoxiden im Abgas zu reduzieren. Hierfür ist bekannt, ein ungiftiges Reduktionsmittel aus Wasser und Harnstoff CH₄N₂O präzise dosiert in den (noch heißen) Abgasstrom einzuspritzen. Es entsteht Ammoniak NH₃ und Kohlendioxid CO₂. Der Ammoniak reagiert mit den Stickoxiden des Abgases in einem der Einspritzung entlang des Abgasstroms nachgeschalteten SCR-Katalysator zu harmlosem Stickstoff N₂ und Wasser H₂O. Unter dem Markennamen AdBlue (Europa) bzw. Diesel Exhaust Fluid (Amerika) kann als Reduktionsmittel beispielsweise mit Wasser versetzter Harnstoff (32,5 %-ige wässrige Harnstofflösung) bezogen werden. Die Einspritzung des Reduktionsmittels kann dabei mit Druckluft vermischt oder direkt in flüssiger Form erfolgen. Die direkte Verwendung von Ammoniak als Reduktionsmittel anstelle von Harnstoff ist theoretisch möglich, aufgrund der ätzenden, umweltgefährdenden und giftigen Eigenschaft von Ammoniak jedoch problematisch.

Nachteilig an der Reinigung von Abgas mittels eines derartigen insbesondere flüssigen Reduktionsmittels ist neben der Tatsache, dass zusätzlich zum Brennstoff Reduktionsmittel bereitgestellt werden muss, dass das Reduktionsmittel zur Erzielung einer hohen NOₓ-Reduktion im richtigen Verhältnis zur Stickoxidemission des Verbrennungsmotors dosiert wird. Dabei ist eine gute Durchmischung des zu reinigenden Abgases mit dem Reduktionsmittel erforderlich. Diese gute Durchmischung wird dadurch begünstigt, dass das Reduktionsmittel mit hohem Druck (üblicherweise 4,5 bis 8,5 bar) in einen das zu reinigende Abgas führenden Abgasstrang eingespritzt wird.

Zur Einspritzung des Reduktionsmittels werden üblicherweise Düsen mit integrierten aktiven Ventilen verwendet. Da diese Düsen den hohen Temperaturen der Abgase ausgesetzt sind, und zudem für ihre Betätigung elektrische Energie benötigen, sind sie sehr störanfällig. Ein Grund für die Verwendung von Düsen mit aktiven Ventilen ist, dass der Gefrierpunkt der 32,5 %-igen wässrigen Harnstofflösung bei -11,5°C liegt. In der Folge ist es bei Minusgraden erforderlich, ein die Harnstofflösung führendes Leitungssystem entleerbar auszugestalten. In der Regel wird die Entleerung des Leitungssystems über ein Öffnen des Ventils der Düse und Umkehrung der Förderrichtung einer die Harnstofflösung fördernden Pumpe durchgeführt, so dass im Leitungssystem befindliche Harnstofflösung in einen die Harnstofflösung bereitstellenden Tank zurückgeführt wird. Der Tank kann dann beheizbar ausgestaltet sein. Ein weiterer Grund für die Verwendung von aktiven Ventilen ist, dass die Menge an eingespritztem Reduktionsmittel häufig durch entsprechende Taktung der Düse kontrolliert wird. Ein entsprechendes System ist aus der US 2014/0182271 A1 bekannt. Problematisch an der Verwendung von Düsen mit integrierten aktiven Ventilen ist, dass diese den hohen Temperaturen des Abgases ausgesetzt sind, und daher häufig ausfallen.

Aus den Gebieten der Dampfturbinen ist es bekannt, passive Düsen zu verwenden, um Wasser in überkritischen Dampf einzuspritzen. Diese weisen aber in der Regel ein Sprühbild auf, welches bei einer Verwendung zum Einspritzen von Reduktionsmittel in einen heißen Abgasstrang eine Vermischung von Reduktionsmittel und Abgas nicht hinreichend begünstigen würde. Exemplarisch für derartige Düsen wird auf die WO 2014/055691 A1 verwiesen.

Es ist Aufgabe der vorliegenden Erfindung, eine Abgasreinigungseinrichtung für Kraftfahrzeuge und eine darin verwendbare Düse bereitzustellen, welche eine erhöhte Robustheit aufweisen und damit weniger störanfällig sind. Es ist eine weitere Aufgabe der vorliegenden Erfindung, eine Düse zum Einspritzen von Reduktionsmittel bereitzustellen, welche ein Sprühbild aufweist, welches eine Vermischung von Reduktionsmittel und Abgas begünstigt.

Die vorstehende Aufgabe wird durch die Kombination der Merkmale der unabhängigen Ansprüche gelöst. Bevorzugte Weiterbildungen finden sich in den Unteransprüchen.

Ausführungsformen einer Düse für eine Abgasreinigungsanlage weisen einen Düsenkörper, einen im Inneren des Düsenkörpers beweglich angeordneten Kolben und eine Feder auf. An dem Düsenkörper sind ein Düseneinlass für ein flüssiges Reduktionsmittel und eine Düsenmündung zum Ausgeben des Reduktionsmittels ausgebildet. Weiter ist in dem Düsenkörper zwischen dem Düseneinlass und der Düsenmündung ein Strömungskanal für das Reduktionsmittel ausgebildet. Über den Strömungskanal wird das Reduktionsmittel vom Düseneinlass zur Düsenmündung geführt. Dabei ist die Düsenmündung so ausgeformt, dass sie sich ausgehend vom Strömungskanal zu einer Düsenöffnung aufweitet. Anders ausgedrückt nimmt ein Durchmesser eines von der Düsenmündung in Umfangsrichtung umschlossenen freien Querschnitts ausgehend vom Strömungskanal hin zur Düsenöffnung zu. Im Inneren des Düsenkörpers befindet sich ein beweglich angeordneter Kolben mit einem Kolbenkopf. Der Kolbenkopf ist im Inneren der Düsenmündung angeordnet und ausgebildet, die Düsenmündung wahlweise zu verschließen oder freizugeben. Die Feder ist zwischen dem Düsenkörper und dem Kolben angeordnet, und spannt den Kolben in eine Richtung vor, in welcher der Kolbenkopf die Düsenmündung verschließt. Dabei ist ein größter Durchmesser der Düsenöffnung größer als ein größter Durchmesser des Kolbenkopfes.

Gemäß einer Ausführungsform werden diese größten Durchmesser senkrecht zu einer Längserstreckung des Strömungskanals oder senkrecht zu einer Längserstreckung des Kolbens gemessen.

Somit weist die Düse ein integriertes passives Ventil auf, welches von dem Kolben und der Feder gebildet wird, und welches mit der Düsenmündung zusammenwirkt. Da die Düse passiv arbeitet und somit keine aktiven Komponenten wie Elektromotoren oder dergleichen aufweist, ist sie sehr robust. Die hohe Unempfindlichkeit der Düse gegen hohe Temperaturen erlaubt einen Einsatz der Düse in Anwendungen, in denen eine Entspannungsverdampfung (sogenannte Flash-Verdampfung) des eingespritzten Reduktionsmittels gewünscht ist. Da der größte Durchmesser der Düsenmündung größer als ein größter Durchmesser des Kolbenkopfes ist, springt die Düsenmündung zumindest in einem Betriebszustand, in welchem der Kolbenkopf an der Düsenmündung anliegt und diese so verschließt, gegenüber dem Kolbenkopf vor. Dies hat zur Folge, dass die Düsenmündung beim Öffnen der Düse (infolge einer Relativbewegung zwischen Kolbenkopf und Düsenmündung) eine Führungsfläche für aus der Düse austretendes flüssiges Reduktionsmittel bereitstellt und so das Sprühbild beeinflusst.

Die vorstehend beschriebene Düse öffnet bei einem über die verwendete Feder (bzw. deren Federkonstante) einstellbaren Druck des zugeführten Reduktionsmittels automatisch und schließt wieder automatisch, wenn dieser Druck unterschritten wird. Damit wird ein Nachlaufen von Reduktionsmittel und das Eindringen von Schmutz oder dergleichen verhindert, wenn kein Reduktionsmittel ausgegeben werden soll. Die Fördermenge/Dosiermenge der vorstehend beschriebenen Düse hängt vom Flüssigkeitsdifferenzdruck des Reduktionsmittels vor und hinter der Düsenöffnung ab. Weiter führt die Verwendung der vorstehenden Düse dazu, dass der Druck des geförderten Reduktionsmittels durch die Düse (und insbesondere durch die in der Düse verwendete Feder und deren Federkonstante) bestimmt wird, und weitgehend konstant ist. Weiter passt sich der Öffnungszustand der Düse bei weitgehend konstantem Druck des Reduktionsmittels automatisch an eine jeweilige Fördermenge für das Reduktionsmittel an, wodurch sich ein entsprechendes Sprühbild ergibt.

Gemäß einer Ausführungsform ist die Düsenöffnung senkrecht zu einer Längserstreckung des Strömungskanals oder senkrecht zu einer Längserstreckung des Kolbens orientiert. Gemäß einer Ausführungsform ist die Feder im Inneren des Düsenkörpers angeordnet. Gemäß einer alternativen Ausführungsform ist die Feder außerhalb des Düsenkörpers angeordnet.

Gemäß einer Ausführungsform ist der größte Durchmesser der Düsenöffnung wenigstens 5 % oder wenigstens 10 % größer als ein größter Durchmesser des Kolbenkopfes. Bei einer derartigen Dimensionierung ist sichergestellt, dass die Düsenmündung in allen oder fast allen Stellungen des Kolbenkopfes gegenüber dem Kolbenkopf vorspringt.

Gemäß einer Ausführungsform springt die Düsenmündung in einem Betriebszustand, in welchem der Kolbenkopf an der Düsenmündung anliegt und diese so verschließt, um 8,6 % oder um mehr als 8,6 % des größten Durchmessers des Kolbenkopfes oder um 17 % oder um mehr als 17 % des größten Durchmessers des Kolbenkopfes oder um 64 % oder um mehr als 64 % des größten Durchmessers des Kolbenkopfes oder um mehr als die Hälfte des größten Durchmessers des Kolbenkopfes gegenüber dem Kolbenkopf vor.

Gemäß einer Ausführungsform weist der Düsenkörper für jeden Betriebszustand des Kolbens (d. h. für jede Stellungen des Kolbenkopfes relativ zur Düsenmündung) im Bereich der Ventilöffnung eine größere Erstreckung in Längserstreckung des Strömungskanals oder Längserstreckung des Kolbens auf, als der Kolbenkopf.

Gemäß einer Ausführungsform schließt die Düsenmündung mit dem Kolbenkopf einen Gegenwinkel ein, der an der Kontaktstelle des Kolbens mit der Düsenmündung in der Schließposition des Kolbens größer als 1° oder größer als 2° oder größer als 3° ist. Dieser Gegenwinkel führt zu einer Druckerhöhung im Reduktionsmittel im Bereich der Düsenmündung und begünstigt ein gutes Sprühbild.

Gemäß einer Ausführungsform wird an der Kontaktstelle des Kolbens mit der Düsenmündung in der Schließposition des Kolbens von der Düsenmündung mit einer Längserstreckung des Kolbens ein Öffnungswinkel eingeschlossen, der kleiner als ein Winkel ist, der an der Kontaktstelle des Kolbens mit der Düsenmündung in der Schließposition des Kolbens von dem Kolbenkopf mit der Längserstreckung des Kolbens eingeschlossen wird. Eine solche Ausgestaltung erlaubt es auf einfache Weise, einen Gegenwinkel zwischen Düsenmündung und Kolbenkopf von größer 1° bereitzustellen.

Gemäß einer Ausführungsform nimmt ein Durchmesser eines von der Düsenmündung in Umfangsrichtung umschlossenen freien Querschnitts in Längsrichtung des Strömungskanals in eine dem Strömungskanal abgewandte Richtung kontinuierlich mit zunehmender Steigung zu. Dies hat zur Folge, dass die erste Ableitung der Änderung des Durchmessers der Düsenmündung in Längsrichtung des Strömungskanals ebenfalls stetig ist. Gemäß einer Ausführungsform nimmt ein Durchmesser der Düsenmündung in Längsrichtung des Kolbens in eine einem Kolbenfuß des Kolbens abgewandte Richtung kontinuierlich mit zunehmender Steigung zu. Dies hat zur Folge, dass die erste Ableitung der Änderung des Durchmessers der Düsenmündung in Längsrichtung des Kolbens ebenfalls stetig ist. Gemäß einer Ausführungsform weist die zunehmende Steigung einen parabelförmigen oder hyperbelförmigen Verlauf auf, wobei der Scheitelpunkt an dem dem Strömungskanal abgewandten Ende des Düsenkörpers angeordnet ist. Gemäß einer alternativen Ausführungsform folgt der Durchmesser der Düsenmündung in Längsrichtung des Strömungskanals einer Kreisbahn. Eine solche Ausgestaltung der Düsenmündung erlaubt es, das Sprühbild für unterschiedliche Fördermengen an Reduktionsmittel anzupassen.

Gemäß einer alternativen Ausführungsform nimmt ein Durchmesser eines von der Düsenmündung in Umfangsrichtung umschlossenen freien Querschnitts in Längsrichtung des Strömungskanals in eine dem Strömungskanal abgewandte Richtung linear zu. Gemäß einer weiteren alternativen Ausführungsform nimmt ein Durchmesser der Düsenmündung in Längsrichtung des Kolbens in eine einem Kolbenfuß des Kolbens abgewandte Richtung linear zu. Derartige Düsenmündungen weisen häufig die Form eines Kegelstumpfmantels auf, und sind besonders einfach zu fertigen.

Gemäß einer Ausführungsform nimmt ein Durchmesser des Kolbenkopfes in Längsrichtung des Kolbens in eine einem Kolbenfuß des Kolbens abgewandte Richtung kontinuierlich mit zunehmender Steigung zu. Dies hat zur Folge, dass die erste Ableitung der Änderung des Durchmessers des Kolbenkopfes in Längsrichtung des Kolbens ebenfalls stetig ist. Gemäß einer Ausführungsform weist die zunehmende Steigung einen parabelförmigen oder hyperbelförmigen Verlauf auf, wobei der Scheitelpunkt an dem einem Kolbenfuß abgewandten Ende des Kolbenkopfes angeordnet ist. Gemäß einer alternativen Ausführungsform folgt der Durchmesser des Kolbenkopfes in Längsrichtung des Kolbens einer Kreisbahn. Eine solche Ausgestaltung des Kolbenkopfes erlaubt es, das Sprühbild für unterschiedliche Fördermengen an Reduktionsmittel anzupassen.

Gemäß einer alternativen Ausführungsform nimmt ein Durchmesser des Kolbenkopfes in Längsrichtung des Kolbens in eine einem Kolbenfuß des Kolbens abgewandte Richtung linear zu.

Gemäß einer Ausführungsform weisen die Düsenöffnung und ein Querschnitt durch den Kolbenkopf senkrecht zur Längsrichtung des Kolbens jeweils eine Kreisform auf. Derartige Düsenöffnungen und Kolbenköpfe lassen sich besonders einfach und mit hoher Präzision herstellen.

Gemäß einer alternativen Ausführungsform weisen die Düsenöffnung und ein Querschnitt durch den Kolbenkopf senkrecht zur Längsrichtung des Kolbens jeweils die Form eines Ovals auf.

Gemäß einer alternativen Ausführungsform weisen die Düsenöffnung und ein Querschnitt durch den Kolbenkopf senkrecht zur Längsrichtung des Kolbens jeweils eine geometrisch ähnliche Polygonform auf.

Gemäß einer alternativen Ausführungsform weisen die Düsenöffnung und ein Querschnitt durch den Kolbenkopf senkrecht zur Längsrichtung des Kolbens jeweils eine geometrisch ähnliche asymmetrische Form auf. Die Verwendung asymmetrischer Querschnitte erlaubt es, stark ausgeprägte Sprühbilder zu erzeugen.

Dabei sollen die Querschnitte der Düsenöffnung und des Kolbenkopfes insbesondere dann als geometrisch ähnlich angesehen werden, wenn sie durch zentrische Streckung ineinander überführt werden können.

Gemäß einer Ausführungsform erfolgt der Übergang zwischen einem Kolbenfuß des Kolbens und dem Kolbenkopf in Längsrichtung des Kolbens kontinuierlich. Gemäß einer alternativen Ausführungsform ist zwischen dem Kolbenfuß und dem Kolbenkopf in Längsrichtung des Kolbens ein Knick vorgesehen, was zur Folge hat, dass die erste Ableitung der Änderung des Durchmessers in Längsrichtung des Kolbens nicht stetig ist.

Ausführungsformen einer Abgasreinigungseinrichtung für Kraftfahrzeuge weisen einen Tank für ein flüssiges Reduktionsmittel, eine Düse mit integriertem passivem Ventil, eine Reduktionsmittelleitung zum Führen des flüssigen Reduktionsmittels von dem Tank zum Düseneinlass der Düse, eine Reduktionsmittelpumpe, welche entlang der Reduktionsmittelleitung zwischen dem Tank und der Düse angeordnet ist und eine Steuerung zum Steuern der Reduktionsmittelpumpe auf. Dabei kann die Düse den vorstehend beschriebenen Aufbau aufweisen. Die Steuerung ist dann ausgebildet, die Reduktionsmittelpumpe und/oder die Düse kontinuierlich mit variabler Fördermenge zu betreiben.

Somit erfolgt bei dieser Abgasreinigungseinrichtung die Dosierung des eingespritzten Reduktionsmittels nicht über eine Taktung der Düse (wie bei der Verwendung von Düsen mit integriertem aktivem Ventil) oder eine Taktung der Reduktionsmittelpumpe. Vielmehr wird die Reduktionsmittelpumpe (und somit auch die Düse) kontinuierlich betrieben und stattdessen die Menge des geförderten flüssigen Reduktionsmittels kontrolliert. Dies weist den Vorteil auf, dass die nichtkonstanten Sprühbilder des eingespritzten Reduktionsmittels zu Beginn und am Ende eines jeden Taktes vermieden werden und sich stattdessen ein kontinuierliches Sprühbild ausbildet. Der Förderdruck wird dabei durch Verwendung der Düse mit passivem Ventil gewährleistet und weitgehend konstant gehalten.

Gemäß einer Ausführungsform wird unter einem kontinuierlichen Betrieb der Reduktionsmittelpumpe verstanden, dass die Reduktionsmittelpumpe nicht getaktet wird, sondern jeweils wenigstens 10 Sekunden und insbesondere wenigstens 30 Sekunden und weiter insbesondere wenigstens 100 Sekunden ununterbrochen Reduktionsmittel zur Düse fördert. Gemäß einer Ausführungsform wird unter einem kontinuierlichen Betrieb der Düse verstanden, dass die Düse nicht getaktet wird, sondern jeweils wenigstens 10 Sekunden und insbesondere wenigstens 30 Sekunden und weiter insbesondere wenigstens 100 Sekunden ununterbrochen Reduktionsmittel abgibt. Bei derartig langen Betriebszeiten der Düse spielen Zustände zu Beginn und am Ende eines Betriebs eine untergeordnete Rolle. Gemäß einer alternativen Ausführungsform wird unter einem kontinuierlichen Betrieb der Reduktionsmittelpumpe verstanden, dass die Reduktionsmittelpumpe während des ganzen Betriebs der Abgasreinigungseinrichtung ununterbrochen Reduktionsmittel zur Düse fördert. Gemäß einer alternativen Ausführungsform wird unter einem kontinuierlichen Betrieb der Düse verstanden, dass die Düse während des ganzen Betriebs der Abgasreinigungseinrichtung ununterbrochen Reduktionsmittel abgibt. Gemäß einer Ausführungsform ist die Reduktionsmittelpumpe eine Zahnradpumpe. Gemäß einer Ausführungsform ist die Reduktionsmittelpumpe eine Innenzahnradpumpe oder Außenzahnradpumpe oder Zahnringpumpe oder Schraubenpumpe. Derartige Pumpen sind sehr robust und erlauben es, das Volumen des geförderten Mediums durch Steuerung der Drehzahl der Reduktionsmittelpumpe mit hoher Genauigkeit einzustellen. Bei im Wesentlichen inkompressiblen Medien (wie flüssiges Reduktionsmittel eines ist) entspricht das geförderte Volumen der Fördermenge. In der Folge ist zur Bestimmung der Fördermenge kein zusätzliches Messgerät erforderlich, sofern die Drehzahl der Reduktionsmittelpumpe erfasst wird und die Geometrie der Reduktionsmittelpumpe bekannt ist.

Gemäß einer Ausführungsform weist die Abgasreinigungseinrichtung weiter einen entlang der Reduktionsmittelleitung zwischen der Pumpe und der Düse angeordneten Drucksensor auf, der ausgebildet ist, den (insbesondere hydrostatischen) Druck des von der Reduktionsmittelleitung geführten Reduktionsmittels zu bestimmen. Die Verwendung eines solchen Drucksensors erlaubt es, einen Defekt der Düse oder der Reduktionsmittelpumpe oder der Reduktionsmittelleitung (oder dergleichen) zu detektieren und die ordnungsgemäße Arbeitsweise der Abgasreinigungseinrichtung zu überwachen.

Gemäß einer Ausführungsform weist die Abgasreinigungseinrichtung weiter eine Heizung auf, welche ausgebildet ist, den Tank und/oder die Reduktionsmittelleitung und/oder die Düse zu beheizen. Auf diese Weise kann bei niedrigen Umgebungstemperaturen ein Einfrieren des Reduktionsmittels verhindert werden.

Gemäß einer Ausführungsform weist die Abgasreinigungseinrichtung weiter eine Druckluftquelle auf, die ausgebildet ist, die Reduktionsmittelleitung und die Düse mit Druckluft zu beaufschlagen, um die Reduktionsmittelleitung und die Düse von Reduktionsmittel zu befreien. Bei dieser Druckluftquelle kann es sich beispielsweise um einen Kompressor oder in Fällen, in denen ohnehin eine Druckluftanlage vorhanden ist, um ein Druckluftventil handeln. Werden die Reduktionsmittelleitung und die Düse nach einem Betrieb mit Druckluft freigeblasen, kann in diesen Komponenten bei niedrigen Temperaturen kein Reduktionsmittel gefrieren.

Gemäß einer Ausführungsform weist die Abgasreinigungseinrichtung weiter eine Abgasleitung zum Führen von zu reinigendem Abgas auf, wobei die Düsenmündung der Düse in der Abgasleitung und insbesondere im Flächenschwerpunkt eines Querschnitts durch die Abgasleitung angeordnet ist. Somit wird die Düsenmündung von Abgas umströmt. Gemäß einer Ausführungsform ist die ganze Düse im Flächenschwerpunkt eines Querschnitts durch die Abgasleitung angeordnet. Wenn die Düsenmündung dann zudem in Strömungsrichtung des Abgases orientiert ist, erlaubt eine derartige Anordnung eine besonders gleichmäßige Verteilung des eingespritzten Reduktionsmittels. Weiter wird das Reduktionsmittel dann bereits in der Düse durch das umgebende heiße Abgas vorgewärmt. Dann weist die Abgasreinigungseinrichtung weiter einen entlang der Strömungsrichtung des von der Abgasleitung geführten Abgases stromabwärts der Düse angeordneten Katalysator auf, welcher zur selektiven katalytischen Reduktion des Abgases unter Verwendung des von der Düse eingespritzten Reduktionsmittels ausgebildet ist.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen
- Figur 1A: schematisch einen Querschnitt durch eine Düse gemäß einer ersten Ausführungsform der Erfindung zeigt;
- Figur 1B: schematisch einen vergrößerten Ausschnitt der Düse aus Figur 1A zeigt;
- Figuren 2A bis 2C: schematisch einen Querschnitt durch einen Mündungsbereich einer Düse gemäß einer zweiten Ausführungsform der Erfindung in unterschiedlichen Betriebszuständen zeigen;
- Figur 3: schematisch eine Aufsicht und zwei Querschnitte auf einen Mündungsbereich einer Düse gemäß einer dritten Ausführungsform der Erfindung zeigt;
- Figur 4: schematisch eine Aufsicht und zwei Querschnitte auf einen Mündungsbereich einer Düse gemäß einer vierten Ausführungsform der Erfindung zeigt;
- Figuren 5A bis 5C: schematisch Querschnitte durch einen Mündungsbereich von Düsen gemäß einer fünften, sechsten und siebten Ausführungsform der Erfindung zeigen; und
- Figur 6: schematisch ein Blockdiagramm einer Abgasreinigungsanlage gemäß einer Ausführungsform der Erfindung zeigt.

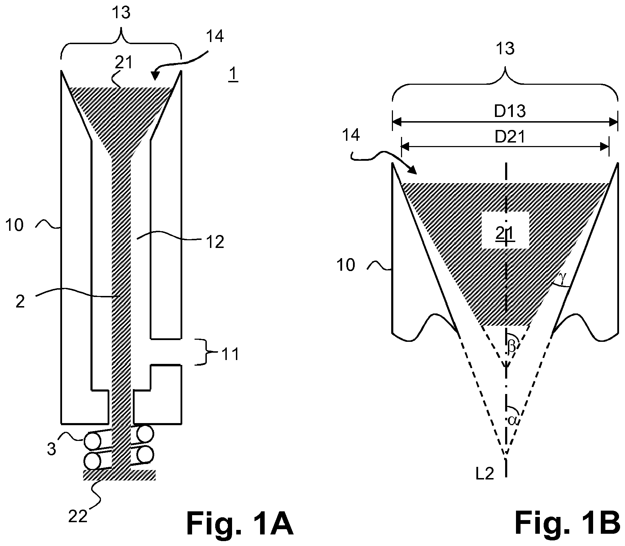

Im Folgenden wird unter Bezugnahme auf die Figuren 1A und 1B eine Düse gemäß einer ersten Ausführungsform beschrieben.

Die Düse 1 weist einen aus Edelstahl gebildeten Düsenkörper 10 auf. Der Düsenkörper 10 weist insgesamt die Form eines Zylindermantels auf, dessen eine Stirnseite verschlossen ist, und dessen andere Stirnseite eine Düsenmündung 14 mit einer kreisförmigen Düsenöffnung 13 bildet. An einer Seitenwand des Düsenkörpers 10 ist ein Düseneinlass 11 in Form einer Bohrung vorgesehen, durch den flüssiges Reduktionsmittel in die Düse 1 eindringen kann. Zwischen dem Düseneinlass 11 und der Düsenmündung 14 ist ein Strömungskanal 12 ausgebildet, der in der gezeigten Ausführungsform einen konstanten kreisförmigen Querschnitt aufweist.

In ihrem Inneren nimmt die Düse 1 einen Kolben 2 auf, der ebenfalls aus Edelstahl gebildet und in der Düse 1 so gelagert ist, dass er sich entlang des Strömungskanals 12 linear hin und her bewegen kann. An einem Ende weist der Kolben 2 einen Kolbenkopf 21 auf, der in der Düsenmündung 14 angeordnet ist. An seinem dem Kolbenkopf 21 abgewandten Ende durchdringt der Kolben 2 die Stirnseite des Düsenkörpers 10 und ist ein insgesamt T-förmiger Kolbenfuß 22 ausgebildet. An der Stelle des Übergangs zwischen Kolbenkopf 21 und dem langen Schenkel des T-förmigen Kolbenfußes 22 befindet sich ein Knick.

Zwischen Kolbenfuß 22 und dem Düsenkörper 10 ist eine Spiralfeder 3 angeordnet, welche den Kolben 2 in eine Richtung vorspannt, in welcher der Kolbenkopf 21 an einer Wandung der Düsenmündung 14 anliegt und so die Düsenöffnung 13 verschließt. Dieser Betriebszustand der Düse 1 ist in den Figuren 1A und 1B gezeigt. In dieser Ausführungsform ist die Spiralfeder 3 aus einer korrosionsbeständigen Nickelbasislegierung gebildet, die unter dem Handelsnamen "Inconel" von der Firma Special Metals Corporation mit Sitz in Huntington, West Virginia, USA bezogen werden kann.

Übersteigt der Druck des über den Düseneinlass 11 zugeführten Reduktionsmittels die Vorspannung der Feder 3, so wird der Kolben 2 in Richtung der Düsenmündung 14 verlagert. In der Folge hört der Kolbenkopf 21 auf, an der Wandung der Düsenmündung 14 anzuliegen und gibt einen Ringspalt frei. Über diesen Ringspalt kann das Reduktionsmittel die Düse 1 über die Düsenöffnung 13 verlassen.

Wie gut aus Figur 1B ersichtlich, weitet sich die Düsenmündung 14 ausgehend vom Strömungskanal 12 hin zu der Düsenöffnung 13 linear auf und schließt dabei mit einer Längsachse L2 des Kolbens 2 einen ersten Winkel α ein. Somit weist die Düsenmündung 14 die Form eines Kegelstumpfmantels auf. Auch der Durchmesser des Kolbenkopfes 21 nimmt im Bereich der Düsenmündung 14 hin zur Düsenöffnung 13 linear zu und schließt dabei mit einer Längsachse L2 des Kolbens 2 einen zweiten Winkel β ein. Somit weist auch der Kolbenkopf 21 die Form eines Kegelstumpfmantels auf. Der zweite Winkel β ist größer als der erste Winkel α, so dass zwischen Kolbenkopf 21 und der Wandung der Düsenmündung 14 ein Gegenwinkel γ eingeschlossen wird. In der gezeigten Ausführungsform beträgt dieser Gegenwinkel γ rund 8°. Weiter ist der größte Durchmesser D 13 der Düsenöffnung 13 rund 8 % größer, als der größte Durchmesser D21 des Kolbenkopfs 21. In der Folge kommt der Kolbenkopf 21 bei verschlossener Düsenöffnung 13 mit einem Abschnitt der Wandung der Düsenmündung 14 in Anlage, welcher Abschnitt gegenüber der Düsenmündung 13 zurückgesetzt ist.

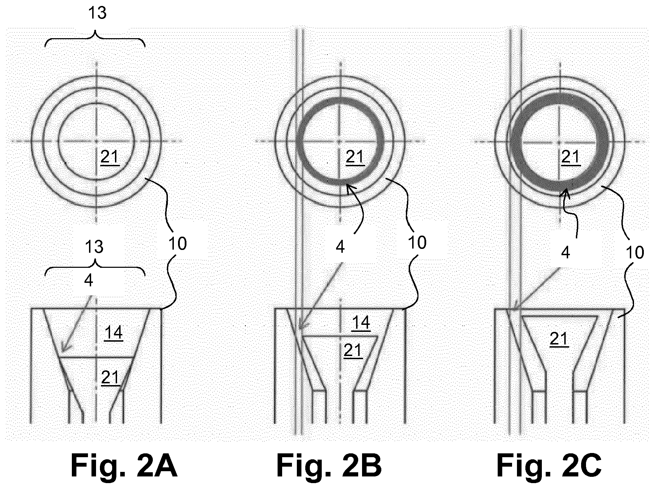

Im Folgenden wird unter Bezugnahme auf die Figuren 2A bis 2C eine Düse gemäß einer zweiten Ausführungsform der Erfindung beschrieben. Dabei ist in den Figuren 2A bis 2C unten jeweils ein Querschnitt im Bereich der Düsenmündung 14 und oben eine Aufsicht auf die Düsenöffnung 13 gezeigt. Weiter sind in den Figuren 2A bis 2C unterschiedliche Betriebszustände der Düse gezeigt. Da die Düse gemäß der zweiten Ausführungsform der vorstehend beschriebenen Düse 1 gemäß der ersten Ausführungsform sehr ähnlich ist, wird im Folgenden nur auf Unterschiede näher eingegangen und ansonsten auf die Ausführungen zur ersten Ausführungsform verwiesen.

Die Düsen gemäß der ersten und zweiten Ausführungsform unterscheiden sich zum einen in den konkreten Werten des von der Wandung der Düsenmündung mit der Längsachse des Kolbens eingeschlossenen ersten Winkels, des von der Wand des Kolbenkopfs mit der Längsachse des Kolbens eingeschlossenen zweiten Winkels und des sich ergebenden Gegenwinkels. Weiter ist der größte Durchmesser der Düsenöffnung 13 in der zweiten Ausführungsform rund 47 % größer als der größte Durchmesser des Kolbenkopfes 21. Schließlich läuft die Wand des Düsenkörpers 10 in der zweiten Ausführungsform anders als in der ersten Ausführungsform nicht unter Einschluss eines spitzen Winkels zur Düsenöffnung 13 hin zu, sondern bildet im Bereich der Düsenöffnung 13 einen Absatz.

Figur 2A zeigt die Düse in einem geschlossenen Zustand, in welchem der Kolbenkopf 21 an der Wandung der Düsenmündung 14 anliegt und die Düsenöffnung 13 so verschließt. In der Folge ist kein Öffnungsspalt 4 zwischen Düsenmündung 14 und Kolbenkopf 21 vorhanden.

Figur 2B zeigt die Düse in einem leicht geöffneten Zustand, in welchem der Kolbenkopf 21 nicht mehr an der Wandung der Düsenmündung 14 anliegt. In der Folge ist zwischen Düsenmündung 14 und Kolbenkopf 21 ein Öffnungsspalt 4 vorhanden.

Figur 2C zeigt die Düse in einem gegenüber Figur 2B weiter geöffneten Zustand, in welchem der Kolbenkopf 21 noch weiter von der Wandung der Düsenmündung 14 beabstandet ist. In der Folge ist zwischen Düsenmündung 14 und Kolbenkopf 21 ein Öffnungsspalt 4 vorhanden, dessen Querschnittsfläche gegenüber der Querschnittsfläche des Öffnungsspalts 4 aus Figur 2B vergrößert ist.

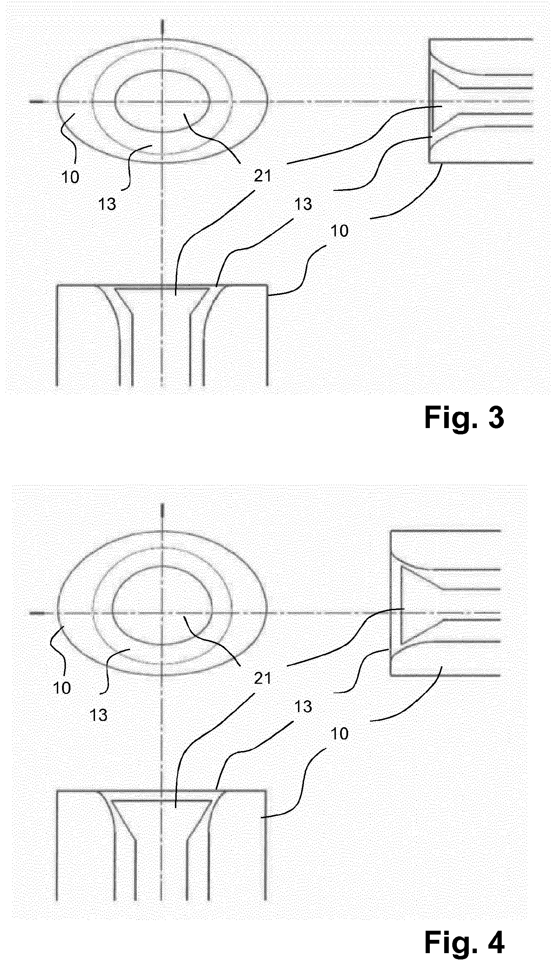

Im Folgenden wird unter Bezugnahme auf die Figur 3 eine Düse gemäß einer dritten Ausführungsform der Erfindung beschrieben. Dabei ist in der Figur 3 unten ein erster Querschnitt im Bereich der Düsenmündung, oben eine Aufsicht auf die Düsenöffnung 13 und rechts ein zweiter Querschnitt im Bereich der Düsenmündung gezeigt, wobei die Schnittachsen der ersten und zweiten Querschnitte aufeinander senkrecht stehen. Da die Düse gemäß der dritten Ausführungsform der vorstehend beschriebenen Düse 1 gemäß der ersten Ausführungsform sehr ähnlich ist, wird im Folgenden nur auf Unterschiede näher eingegangen und ansonsten auf die Ausführungen zur ersten Ausführungsform verwiesen.

Die Düse gemäß der dritten Ausführungsform unterscheidet sich von der Düse gemäß der ersten Ausführungsform insbesondere dadurch, dass die Düsenöffnung 13 und ein Querschnitt durch den Kolbenkopf 21 senkrecht zur Längsrichtung des Kolbens 2 jeweils eine ovale Form aufweisen. Auch der Düsenkörper 10 weist einen ovalen Querschnitt und eine erhöhte Wandstärke auf. Weiter nimmt gemäß der dritten Ausführungsform ein Durchmesser des von der Düsenmündung in Umfangsrichtung umschlossenen freien Querschnitts in dem Strömungskanal abgewandte Richtung nicht linear zu, sondern kontinuierlich mit zunehmender Steigung/Krümmung. Dabei ist die Steigung so gewählt, dass sich bei einer linearen Verlagerung des Kolbens ein progressiver Verlauf der Querschnittsfläche eines sich ergebenden Öffnungsspalts ergibt.

Im Folgenden wird unter Bezugnahme auf die Figur 4 eine Düse gemäß einer vierten Ausführungsform der Erfindung beschrieben. Dabei ist in der Figur 4 unten ein erster Querschnitt im Bereich der Düsenmündung, oben eine Aufsicht auf die Düsenöffnung 13 und rechts ein zweiter Querschnitt im Bereich der Düsenmündung gezeigt, wobei die Schnittachsen der ersten und zweiten Querschnitte aufeinander senkrecht stehen. Da die Düse gemäß der vierten Ausführungsform der vorstehend beschriebenen Düse gemäß der dritten Ausführungsform sehr ähnlich ist, wird im Folgenden nur auf Unterschiede näher eingegangen und ansonsten auf die Ausführungen zur dritten Ausführungsform verwiesen.

Die Düse gemäß der vierten Ausführungsform unterscheidet sich von der Düse gemäß der dritten Ausführungsform nur dadurch, dass der Düsenkörper 10, die Düsenöffnung 13 und ein Querschnitt durch den Kolbenkopf 21 senkrecht zur Längsrichtung des Kolbens jeweils eine geometrisch ähnliche asymmetrische Form aufweisen. Dies erlaubt es, das Sprühbild noch flexibler zu gestalten und beispielsweise in Umfangsrichtung Vorzugsrichtungen, in die besonders viel Reduktionsmittel eingespritzt wird, oder Vermeidungsrichtungen, in die besonders wenig Reduktionsmittel eingespritzt wird, vorzusehen. Beispielsweise kann auf diese Weise eine in einem Abgasstrang befindliche Zerstäuberfläche gezielt angesprüht werden.

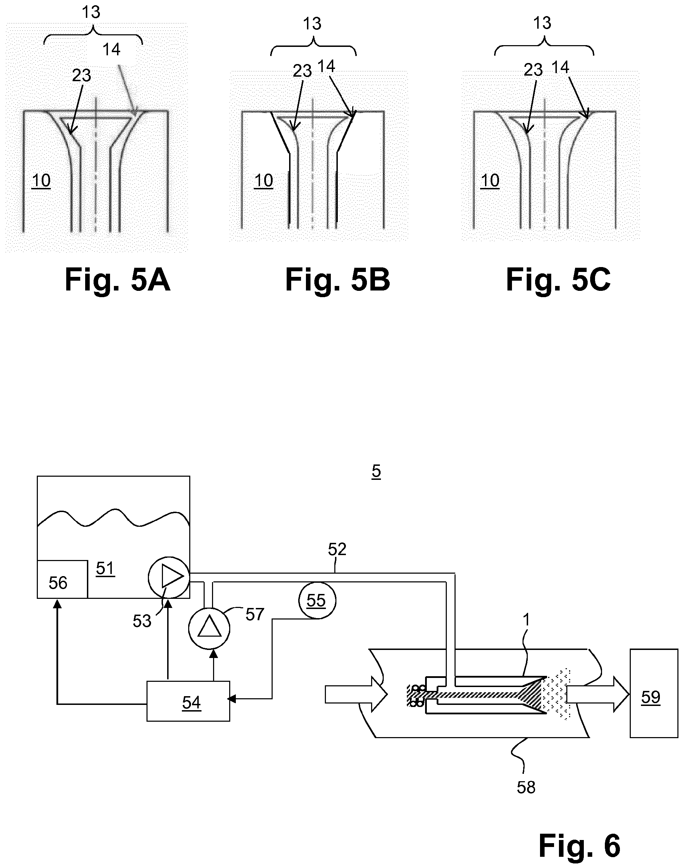

Im Folgenden werden unter Bezugnahme auf die Figuren 5A bis 5C Düsen gemäß einer fünften, sechsten und siebten Ausführungsform der Erfindung beschrieben. Da diese Düsen der vorstehend beschriebenen Düse 1 gemäß der ersten Ausführungsform sehr ähnlich sind, wird im Folgenden nur auf Unterschiede näher eingegangen und ansonsten auf die Ausführungen zur ersten Ausführungsform verwiesen.

Aus Figur 5A ist ersichtlich, dass es möglich ist, einen Kolbenkopf, dessen Durchmesser in Längsrichtung des Kolbens in eine einem Kolbenfuß des Kolbens abgewandte Richtung linear zunimmt, und der in der Folge eine Oberfläche 23 aufweist, welche in Längsrichtung des Kolbens linear verläuft, mit einer Düsenmündung 14 zu kombinieren, deren Durchmesser in Längsrichtung des Strömungskanals in eine dem Strömungskanal abgewandte Richtung kontinuierlich mit zunehmender Steigung zunimmt und somit gekrümmt verläuft. Es ist zu beachten, dass der Übergang zwischen Kolbenfuß und Kolbenkopf in dieser Ausführungsform einen Knick aufweist.

Aus Figur 5B ist ersichtlich, dass es möglich ist, einen Kolbenkopf, dessen Durchmesser in Längsrichtung des Kolbens in eine dem Kolbenfuß abgewandte Richtung kontinuierlich mit zunehmender Steigung zunimmt, und der in der Folge eine Oberfläche 23 aufweist, welche in Längsrichtung des Kolbens gekrümmt verläuft, mit einer Düsenmündung 14 zu kombinieren, deren Durchmesser in Längsrichtung des Strömungskanals in eine dem Strömungskanal abgewandte Richtung linear zunimmt und somit linear verläuft. Es ist zu beachten, dass der Übergang zwischen Kolbenfuß und Kolbenkopf in dieser Ausführungsform keinen Knick aufweist.

Aus Figur 5C ist ersichtlich, dass es möglich ist, einen Kolbenkopf, dessen Durchmesser in Längsrichtung des Kolbens in eine dem Kolbenfuß abgewandte Richtung kontinuierlich mit zunehmender Steigung zunimmt, und der in der Folge eine Oberfläche 23 aufweist, welche in Längsrichtung des Kolbens gekrümmt verläuft, mit einer Düsenmündung 14 zu kombinieren, deren Durchmesser in Längsrichtung des Strömungskanals in eine dem Strömungskanal abgewandte Richtung kontinuierlich mit zunehmender Steigung zunimmt und somit ebenfalls gekrümmt verläuft. Es ist zu beachten, dass der Übergang zwischen Kolbenfuß und Kolbenkopf in dieser Ausführungsform keinen Knick aufweist.

Im Folgenden wird unter Bezugnahme auf das in Figur 6 schematisch gezeigte Blockdiagramm eine Ausführungsform einer Abgasreinigungsanlage gemäß der Erfindung erläutert.

Die Abgasreinigungseinrichtung 5 weist einen Kunststofftank 51 für ein flüssiges Reduktionsmittel (im vorliegenden Fall eine wässrige Harnstofflösung) auf. In dem Kunststofftank 51 sind eine Reduktionsmittelpumpe 53 und eine Heizung 56 angeordnet. Bei der Reduktionsmittelpumpe 53 handelt es sich in der gezeigten Ausführungsform um eine Innenzahnradpumpe und damit um eine Pumpe, deren Fördermenge von der Drehzahl abhängt und die dazu in der Lage ist, kontinuierlich Reduktionsmittel zu fördern. Die Heizung 56 verhindert ein Einfrieren des im Kunststofftank 51 und der Reduktionsmittelpumpe 53 befindlichen Reduktionsmittels, bzw. taut eingefrorenes Reduktionsmittel wieder auf.

Ein Auslass der Reduktionsmittelpumpe 53 steht mit einer Reduktionsmittelleitung 52 zum Führen des Reduktionsmittels in Verbindung. In der gezeigten Ausführungsform ist die Reduktionsmittelleitung 52 ein hitzebeständiger Kunststoffschlauch, der in den Düseneinlass 11 einer Düse 1 mit integriertem passivem Ventil, wie sie vorstehend in Verbindung mit der ersten Ausführungsform beschrieben worden ist, mündet.

Die Düse 1 ist in der gezeigten Ausführungsform im Flächenschwerpunkt eines Querschnitts durch eine Abgasleitung 58 der Abgasreinigungseinrichtung 5 angeordnet und so orientiert, dass die Düsenmündung mit der Düsenöffnung in Strömungsrichtung des Abgases orientiert ist. Die Strömungsrichtung des Abgases in der Abgasleitung 58 ist in Figur 6 durch Pfeile gezeigt. Somit wird die Düse 1 von dem Abgas umströmt.

Stromabwärts der Düse 1 mündet die Abgasleitung 58 in einen SCR-Katalysator 59 der Abgasreinigungseinrichtung 5, welcher zur selektiven katalytischen Reduktion des Abgases unter Verwendung des von der Düse 1 eingespritzten Reduktionsmittels ausgebildet ist.

Weiter ist an der Reduktionsmittelleitung 52 benachbart zum Tank eine Druckluftquelle in Form eines Kompressors 57 vorgesehen. Der Kompressors 57 ist ausgebildet, die Reduktionsmittelleitung 52 und die Düse 1 mit Druckluft zu beaufschlagen, um die Reduktionsmittelleitung 52 und die Düse 1 von Reduktionsmittel zu befreien, wenn die Reduktionsmittelpumpe 53 nicht verwendet wird.

Schließlich ist an der Reduktionsmittelleitung 52 ein Drucksensor 55 angeordnet, welcher den hydrostatischen Druck des in der Reduktionsmittelleitung 52 geführten Reduktionsmittels bestimmt.

Die Reduktionsmittelpumpe 53, der Drucksensor 55, die Heizung 56 und der Kompressor 57 sind mit einer zentralen Steuerung 54 der Abgasreinigungseinrichtung 5 verbunden. Die Steuerung 54 betreibt während des Betriebs der Abgasreinigungseinrichtung 5 kontinuierlich die Reduktionsmittelpumpe 53 und aktiviert bei niedrigen Umgebungstemperaturen bei Bedarf die Heizung 56. Dabei regelt die Steuerung die Fördermenge der Reduktionsmittelpumpe 53 über die Drehzahl der Reduktionsmittelpumpe 53. Der Förderdruck wird dabei von der Düse 1 auf einem weitgehend konstanten Niveau gehalten, da sich eine Öffnungsstellung des Kolbens der Düse 1 an eine jeweilige Fördermenge anpasst. Die korrekte Arbeitsweise des Systems wird durch den Drucksensor 55 überwacht. So deutet ein vom Drucksensor 55 ausgegebener zu hoher Druck auf eine Verstopfung der Düse 1 hin. Ein vom Drucksensor 55 ausgegebener zu niedriger Druck kann auf eine Fehlfunktion der Reduktionsmittelpumpe 53 oder ein Leck in der Reduktionsmittelleitung 52 hinweisen.

Die Steuerung 54 kann mit einer Motorsteuerung (nicht gezeigt) verbunden sein, und von dieser eine Anforderung für die zur Abgasreinigung benötigte Reduktionsmittelmenge erhalten. Alternativ kann die Steuerung 54 auch in die Motorsteuerung integriert sein.

Obwohl die voranstehenden Ausführungsbeispiele der vorliegenden Erfindung lediglich beispielhaft erläutert worden sind, werden die Fachleute erkennen, dass zahlreiche Modifikationen, Hinzufügungen und Ersetzungen möglich sind, ohne von dem Schutzbereich und Geist der in den nachfolgenden Ansprüchen offenbarten Erfindung abzuweichen.

### Bezugszeichenliste

- 1: Düse
- 10: Düsenkörper
- 11: Düseneinlass
- 12: Strömungskanal
- 13: Düsenöffnung
- 14: Düsenmündung
- 2: Kolben
- 21: Kolbenkopf
- 22: Kolbenfuß
- 23: Oberfläche des Kolbenkopfs in Umfangsrichtung
- 3: Feder
- 4: Öffnungspalt
- 5: Abgasreinigungseinrichtung
- 51: Tank
- 52: Reduktionsmittelleitung
- 53: Reduktionsmittelpumpe
- 54: Steuerung
- 55: Drucksensor
- 56: Heizung
- 57: Druckluftquelle
- 58: Abgasleitung
- 59: Katalysator
- α: Winkel zwischen Düsenmündung und Längsachse des Kolbens
- β: Winkel zwischen Kolbenkopf und Längsachse des Kolbens
- γ: Gegenwinkel zwischen Kolbenkopf und Düsenmündung
- D13: größter Durchmesser der Düsenmündung
- D21: größter Durchmesser des Kolbenkopfes
- L2: Längsachse des Kolbens

## Patentansprüche

1. Düse (1) für eine Abgasreinigungsanlage, aufweisend:
einen Düsenkörper (10) mit einem Düseneinlass (11) für ein flüssiges Reduktionsmittel und einer Düsenmündung (14), wobei zwischen dem Düseneinlass (11) und der Düsenmündung (14) ein Strömungskanal (12) für das flüssige Reduktionsmittel ausgebildet ist, und wobei sich die Düsenmündung (14) ausgehend vom Strömungskanal (12) zu einer Düsenöffnung (13) aufweitet;
einen im Inneren des Düsenkörpers (10) beweglich angeordneten Kolben (2) mit einem Kolbenkopf (21), wobei der Kolbenkopf (21) im Inneren der Düsenmündung (14) angeordnet und ausgebildet ist, die Düsenmündung (14) wahlweise zu verschließen oder freizugeben; und
eine Feder (3), welche zwischen dem Düsenkörper (10) und dem Kolben (2) angeordnet ist, und den Kolben (2) in eine Richtung vorspannt, in welcher der Kolbenkopf (21) die Düsenmündung (14) verschließt,
wobei ein größter Durchmesser (D13) der Düsenöffnung (13) größer als ein größter Durchmesser (D21) des Kolbenkopfes (21) ist.

2. Düse (1) nach Anspruch 1, wobei der größte Durchmesser (D13) der Düsenöffnung (13) wenigstens 5 % oder wenigstens 10 % größer als ein größter Durchmesser (D21) des Kolbenkopfes (21) ist.

3. Düse (1) nach Anspruch 1 oder 2, wobei die Düsenmündung (14) zumindest in einem Betriebszustand, in welchem der Kolbenkopf (21) an der Düsenmündung (13) anliegt und diese so verschließt, gegenüber dem Kolbenkopf (21) vorspringt, wodurch die Düsenmündung (14) beim Öffnen der Düse (1) eine Führungsfläche für aus der Düse (1) austretendes flüssiges Reduktionsmittel bereitstellt.

4. Düse (1) nach Anspruch 3, wobei die Düsenmündung (14) in allen Stellungen des Kolbenkopfes (21) gegenüber dem Kolbenkopf (21) vorspringt.

5. Düse (1) nach Anspruch 3 oder 4, wobei die Düsenmündung (14) in einem Betriebszustand, in welchem der Kolbenkopf (21) an der Düsenmündung (13) anliegt und diese so verschließt,
um 8,6 % oder um mehr als 8,6 % des größten Durchmessers (D21) des Kolbenkopfes (21) gegenüber dem Kolbenkopf (21) vorspringt oder
um 17 % oder um mehr als 17 % des größten Durchmessers (D21) des Kolbenkopfes (21) gegenüber dem Kolbenkopf (21) vorspringt oder
um 64 % oder um mehr als 64 % des größten Durchmessers (D21) des Kolbenkopfes (21) gegenüber dem Kolbenkopf (21) vorspringt oder
um mehr als die Hälfte des größten Durchmessers (D21) des Kolbenkopfes (21) gegenüber dem Kolbenkopf (21) vorspringt.

6. Düse (1) nach einem der Ansprüche 1 bis 5, wobei die Düsenmündung (14) mit dem Kolbenkopf (21) einen Gegenwinkel (γ) einschließt, der an der Kontaktstelle des Kolbens (2) in seiner Schließposition größer als 1° oder größer als 2° oder größer als 3° ist.

7. Düse (1) nach einem der Ansprüche 1 bis 6,
wobei ein Durchmesser der Düsenmündung (14) in Längsrichtung des Strömungskanals (12) oder Kolbens (2) in eine dem Strömungskanal (12) oder einem Kolbenfuß (22) des Kolbens (2) abgewandte Richtung kontinuierlich mit zunehmender Steigung zunimmt; oder
wobei ein Durchmesser der Düsenmündung (14) in Längsrichtung des Strömungskanals (12) oder Kolbens (2) in eine dem Strömungskanal (12) oder einem Kolbenfuß (22) des Kolbens (2) abgewandte Richtung linear zunimmt; und/oder
wobei ein Durchmesser des Kolbenkopfes (21) in Längsrichtung des Kolbens (2) in eine einem Kolbenfuß (22) des Kolbens (2) abgewandte Richtung kontinuierlich mit zunehmender Steigung zunimmt; oder
wobei ein Durchmesser des Kolbenkopfes (21) in Längsrichtung des Kolbens (2) in eine einem Kolbenfuß (22) des Kolbens (2) abgewandte Richtung linear zunimmt.

8. Düse (1) nach einem der Ansprüche 1 bis 7,
wobei die Düsenöffnung (13) und ein Querschnitt durch den Kolbenkopf (21) senkrecht zur Längsrichtung des Kolbens (2) jeweils eine Kreisform aufweisen; oder
wobei die Düsenöffnung (13) und ein Querschnitt durch den Kolbenkopf (21) senkrecht zur Längsrichtung des Kolbens (2) jeweils die Form eines Ovals aufweisen; oder
wobei die Düsenöffnung (13) und ein Querschnitt durch den Kolbenkopf (21) senkrecht zur Längsrichtung des Kolbens (2) jeweils eine geometrisch ähnliche Polygonform aufweisen; oder
wobei die Düsenöffnung (13) und ein Querschnitt durch den Kolbenkopf (21) senkrecht zur Längsrichtung des Kolbens (2) jeweils eine geometrisch ähnliche asymmetrische Form aufweisen.

9. Düse (1) nach einem der Ansprüche 1 bis 8, wobei der Übergang zwischen einem Kolbenfuß (22) des Kolbens (2) und dem Kolbenkopf (21) in Längsrichtung des Kolbens (2) kontinuierlich erfolgt oder einen Knick aufweist.

10. Abgasreinigungseinrichtung (5) für Kraftfahrzeuge aufweisend:
einen Tank (51) für ein flüssiges Reduktionsmittel;
eine Düse (1) mit integriertem passivem Ventil, insbesondere eine Düse (1) nach einem der Ansprüche 1 bis 9;
eine Reduktionsmittelleitung (52) zum Führen des flüssigen Reduktionsmittels von dem Tank (51) zum Düseneinlass (11) der Düse (1);
eine Reduktionsmittelpumpe (53), welche entlang der Reduktionsmittelleitung (52) zwischen dem Tank (51) und der Düse (1) angeordnet ist; und
eine Steuerung (54) zum Steuern der Reduktionsmittelpumpe (53);
wobei die Steuerung (54) ausgebildet ist, die Reduktionsmittelpumpe (53) und/oder die Düse (1) kontinuierlich mit variabler Fördermenge zu betreiben.

11. Abgasreinigungseinrichtung (5) nach Anspruch 10, wobei die Reduktionsmittelpumpe (53) eine Zahnradpumpe, insbesondere eine Innenzahnradpumpe oder Außenzahnradpumpe oder Zahnringpumpe oder Schraubenpumpe ist.

12. Abgasreinigungseinrichtung (5) nach Anspruch 10 oder 11, weiter aufweisend einen entlang der Reduktionsmittelleitung (52) zwischen der Reduktionsmittelpumpe (53) und der Düse (1) angeordneten Drucksensor (55), der ausgebildet ist, den Druck des von der Reduktionsmittelleitung (52) geführten Reduktionsmittels zu bestimmen.

13. Abgasreinigungseinrichtung (5) nach einem der Ansprüche 10 bis 12, weiter aufweisend:
eine Heizung (56), welche ausgebildet ist, den Tank (51) und/oder die Reduktionsmittelleitung (52) und/oder die Düse (1) zu heizen; und/oder eine Druckluftquelle (57), die ausgebildet ist, die Reduktionsmittelleitung (52) und die Düse (1) mit Druckluft zu beaufschlagen, um die Reduktionsmittelleitung (52) und die Düse (1) von Reduktionsmittel zu befreien.

14. Abgasreinigungseinrichtung (5) nach einem der Ansprüche 10 bis 13, weiter aufweisend:
eine Abgasleitung (58) zum Führen von zu reinigendem Abgas, wobei die Düsenmündung (14) der Düse (1) in der Abgasleitung (58) und insbesondere im Flächenschwerpunkt eines Querschnitts durch die Abgasleitung (58) angeordnet ist; und
einen entlang der Abgasleitung (58) stromabwärts der Düse (1) angeordneten Katalysator (59), welcher zur selektiven katalytischen Reduktion des Abgases unter Verwendung des von der Düse (1) eingespritzten Reduktionsmittels ausgebildet ist.

15. Abgasreinigungseinrichtung (5) nach einem der Ansprüche 10 bis 14, wobei die Reduktionsmittelpumpe (53) nicht getaktet ist und/oder die Düse (1) nicht getaktet ist.
